## Europäisches Patentamt
## European Patent Office
## Office européen des brevets

(19)

(11) Veröffentlichungsnummer : **0 126 965**
**B1**

(12) **EUROPÄISCHE PATENTSCHRIFT**

(45) Veröffentlichungstag der Patentschrift :
15.03.89

(51) Int. Cl.⁴ : **D 07 B   1/00**

(21) Anmeldenummer : **84104545.3**

(22) Anmeldetag : **21.04.84**

(54) **Aus mindestens zwei Komponenten bestehendes Verstärkungsseil.**

(30) Priorität : **16.05.83 DE 3317708**
**23.03.84 DE 3410703**

(43) Veröffentlichungstag der Anmeldung :
**05.12.84 Patentblatt 84/49**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
DE--A-- 1 605 688
DE--A-- 2 015 898
DE--A-- 2 917 756
FR--A-- 2 152 078
FR--A-- 2 338 152
FR--A-- 2 343 080
FR--A-- 2 472 040
GB--A-- 2 003 525
US--A-- 3 402 546
RESEARCH DISCLOSURE, Juli 1977, Seiten 53,54, Nr. 15955, Havant, Hampshire, GB; "Reinforcing cord for elastomeric articles"

(73) Patentinhaber : **Akzo Patente GmbH**
**Postfach 10 01 49 Kasinostrasse 19-23**
**D-5600 Wuppertal-1 (DE)**

(72) Erfinder : **Weidenhaupt, Wolfgang, Dr.**
**Nikolaus-Otto-Strasse 13**   .
**D-5140 Erkelenz (DE)**
Erfinder : **Wepner, Günther**
**Johannes Strasse 56**
**D-5139 Waldfeucht-Neuhaaren (DE)**
Erfinder : **Dismon, Peter**
**Bendengasse 13**
**D-5138 Heinsberg-Proselen (DE)**
Erfinder : **Remijn, Mattheus Gerardus**
**Plevierstraat 19**
**Velp (NL)**

EP 0 126 965 B1

**Beschreibung**

Die Erfindung betrifft ein Verstärkungsseil aus mindestens zwei Komponenten, wobei eine Komponente aus Stahldrähten und eine zweite Komponente aus Fäden aus p-aromatischen Polyamiden besteht.

In der DE-A-29 17 756 ist ein derartiges Verstärkungsseil beschrieben. Es wird dort ausgeführt, daß der Unterschied in der Materialdehnung von Stahldrähten und Fäden aus Aramiden über konstruktive Maßnahmen dadurch verringert werden soll, daß der Stahldraht spiralig mit einer Schlaglänge um einen Kern aus Aramid-Fäden gewickelt ist, welche kleiner ist als die der Aramid-Fäden. Ein solcher Stahldraht trägt solange nicht zur Gesamtfestigkeit des Verstärkungsseiles bei, bis die Dehnung der konstruktiven Maßnahmen überschritten ist, d. h. die Belastung wird anfangs nur von den Aramidfäden aufgenommen. Außerdem ist diese konstruktive Maßnahme sehr aufwendig, weil durch das Herumwickeln eines Stahldrahtes die Herstellgeschwindigkeit eines solchen Verstärkungsseiles mit Verringerung der Schlaglänge reduziert wird. Außerdem wird durch die konstruktive Maßnahme im Belastungsfall eines in ein elastomeres Material eingebetteten Verstärkungsseiles die Bindung zwischen Verstärkungsseil und elastomeren Material beeinträchtigt. Besonders beim Einsatz solcher Verstärkungsseile in elastomeren Erzeugnissen, welche einer dynamischen Beanspruchung unterworfen sind, wie beispielsweise beim Einsatz in Förderbändern, Treibriemen oder Fahrzeug-Luftreifen, ergibt die Beeinträchtigung der Bindung zwischen Verstärkungsseil und elastomerem Material eine Erhöhung der Korrosionsgefahr bei Stahldrähten. Eine Erniedrigung der Laufzeit solcher elastomerer Erzeugnisse ist die Folge.

Ein weiterer Nachteil des in der DE-A-29 17 756 beschriebenen Verstärkungsseiles liegt darin, daß durch die beschriebene konstruktive Maßnahme lediglich ein Bruch der Stahldrähte bei Normal-Belastung vermieden wird. Über diese konstruktive Maßnahme würde nur durch eine sehr geringe Schlaglänge des um die Aramidfäden gewickelten Stahldrahtes die Dehnung der Aramidfäden erreicht. Dies ergibt jedoch eine sehr aufwendige Konstruktion des Verstärkungsseiles. Es ergibt sich zwar über die beschriebene Maßnahme ein Verstärkungsseil mit höherer Reißkraft. Die Reißkraft der Aramidfäden läßt sich jedoch durch diese Maßnahme bei vertretbarem Aufwand nicht voll ausnutzen.

Außerdem wird in der DE-A-16 05 688 darauf hingewiesen, daß die Zerreißfestigkeit eines Verstärkungsseiles in der Fläche eines gleichzeitigen Bruchs liegen muß, und dies nur eintreten könne, wenn die Module der einzelnen Schichten ähnlich seien.

Deswegen wird dort vorgeschlagen, den Bruchmodul der Komponenten praktisch gleich zu wählen. Es handelt sich dort jedoch nicht um einen Kombinationscord, der Stahldrähte und Fäden aus aromatischem Polyamid enthält.

Aufgabe der vorliegenden Erfindung ist es, unter Vermeidung der oben beschriebenen Nachteile ein Verstärkungsseil der eingangs genannten Art mit sehr hoher Reißkraft zur Verfügung zu stellen, bei welchem sich die Reißkräfte der Einzelkomponenten im wesentlichen addieren.

Hat beispielsweise die Komponente der Stahldrähte eine Reißkraft von 300 N und die Komponente der Fäden aus aromatischen Polyamiden eine Reißkraft von 650 N, so soll ein aus diesen Komponenten bestehendes Verstärkungsseil eine Reißkraft von etwa 950 N aufweisen.

Unter dem Begriff Komponente werden Einzeldrähte, Litzen aus Drähten und/oder Seile aus Stahldrähten bzw. Filamente und/oder Filamentgarne, welche jeweils aus demselben Material bestehen, zusammengefaßt.

Diese Aufgabe wird erfindungsgemäß bei einem Verstärkungsseil aus mindestens zwei Komponenten, wobei eine erste Komponente aus Stahldrähten und eine zweite Komponente aus Fäden aus aromatischen Polyamiden besteht, dadurch gelöst, daß bei der ersten Komponente jeder Stahldraht einen annähernd rechteckigen Querschnitt, dessen Kanten gerundet sind, aufweist und verdreht ist, und daß die Fäden aus aromatischem Polyamid miteinander zu einem Filamentgarn verzwirnt sind.

Unter aromatischen Polyamiden wird besonders Poly-(p-phenylenterephthalamid) verstanden.

Es wurde erfindungsgemäß gefunden, daß es bei einem Verstärkungsseil aus den beiden Komponenten Stahl und aromatisches Polyamid ausreicht, wenn es gelingt, die Bruchdehnung der einen Komponente an die Bruchdehnung der anderen Komponente anzugleichen, damit sich die Reißkräfte der Einzelkomponente im wesentlichen addieren. Bei dem erfindungsgemäßen Verstärkungsseil wird die Bruchdehnung und somit das Kraft-Dehnungs-Verhalten der Komponente der Stahldrähte an das Kraft-Dehnungsverhalten der Komponente aus Fäden aus aromatischem Polyamid angepaßt. Dies wird dadurch erreicht, daß Stahldrähte eingesetzt werden, die rechteckigen Querschnitt, dessen Kanten gerundet sind, aufweisen, und die verdreht sind.

Hierbei ist es zweckmäßig, daß die Stahldrähte aus gezogenem Stahl aus 0,6 bis 0,9 Gew.-% bestehen und als gezogene Runddrähte eine Zugfestigkeit von 2 500 bis 3 500 N/mm² aufweisen. Stahldrähte aus gezogenem Stahl mit 0,6 bis 0,9 Gew.-% C und mit einer Zugfestigkeit von 2 500 bis 3 500 N/mm² sind hochfeste Runddrähte und weisen eine Bruchdehnung von etwa 2 % auf. Da diese hochfesten Runddrähte geeignet sind, hohe Beanspruchungen auszuhalten, sind diese Stahldrähte besonders als Komponente für Verstärkungsseile geeignet, welche hohe Reißkraft aufweisen sollen. Die spezifische Zugfestigkeit des Verstärkungsseiles, bezogen auf das Eigengewicht des Verstärkungsseils, kann beim Einsatz solcher hochfesten Runddrähte günstig erhöht werden.

Besonders vorteilhaft ist es, wenn bei der ersten Komponente jeder Stahldraht einen annähernd

EP 0 126 965 B1

rechteckigen Querschnitt, dessen Kanten gerundet sind, aufweist, und verdreht ist. Dabei hat es sich als günstig erwiesen, wenn jeder Stahldraht 40 bis 200 Drehungen pro Meter aufweist.

Um bei erfindungsgemäßen Verstärkungsseilen gute Eigenschaften zu gewährleisten, beispielsweise um die Reibbeanspruchung benachbarter Stahldrähte zu verringern, um somit die Gefahr der Reibkorrosion herabzusetzen, ist es besonders günstig, wenn nebeneinanderliegende Stahldrähte in linienförmigem Kontakt angeordnet sind. Voraussetzung für linienförmigen Kontakt bei Stahldrähten mit rechteckigem Querschnitt ist, daß die Kanten des rechteckigen Querschnitts der Stahldrähte gut gerundet sind.

Die Querschnittsfläche jedes Stahldrahtes liegt hierbei günstig zwischen 0,03 und 0,2 mm², und das Verhältnis von Breite zu Dicke jedes Stahldrahtquerschnitts zwischen 1 und 4. Liegt das Verhältnis von Breite zu Dicke des Stahldrahtquerschnitts bei 1, so ergibt sich ein Stahldraht mit annähernd quadratischem Querschnitt, dessen Ecken (Kanten) gerundet sind.

Ein annähernd rechteckigen Querschnitt aufweisender Stahldraht kann beispielsweise derart hergestellt werden, daß ein Draht mit rundem Querschnitt flachgewalzt wird, wobei in Breitenrichtung quer zur Laufrichtung des Drahtes auf einen Formzwang verzichtet wird und das Drahtmaterial in dieser Richtung frei fließen kann.

Das Kraft-Dehnungs-Verhalten der ersten Komponente kann besonders gut an die der zweiten Komponente angepaßt werden, wenn jeweils zwei oder mehr Stahldrähte miteinander verdreht sind.

Es hat sich als Vorteil herausgestellt, wenn die Fäden aus aromatischem Polyamid miteinander zu einem Filamentgarn verzwirnt sind. Hierdurch liegen die Fäden aus aromatischem Polyamid in besonders kompakter Form vor. Durch die Zwirnung der Fäden aus aromatischem Polyamid ist gewährleistet, daß ein solches gezwirntes Filamentgarn bei der Weiterverarbeitung einen kreisförmigen Querschnitt beibehält, sich also nicht flach legt. Zweckmäßigerweise werden zwei oder mehr solcher gezwirnten Filamentgarne miteinander verzwirnt, wobei die Drehrichtung der Fäden in den Filamentgarnen entgegengesetzt der Drehrichtung der Filamentgarne gerichtet ist.

Besonders günstig ist es, wenn die Differenz zwischen den Zwirndrehungen der Filamentgarne und den Zwirndrehungen der Fäden aus aromatischem Polyamid bei Werten von 50 bis 200 Drehungen pro Meter liegt. Werden beispielsweise mehrere gezwirnte Filamentgarne miteinander mit 140 Drehungen pro Meter in S-Richtung verzwirnt, wobei die Fäden der einzelnen Filamentgarne 50 Drehungen pro Meter in Z-Richtung aufweisen, so ist die Differenz zwischen den Zwirndrehungen der Filamentgarne und den Zwirndrehungen der Fäden aus aromatischem Polyamid gleich 90 Drehungen pro Meter. Durch die geringe Zwirnung der Fäden aus aromatischen Polyamid mit 50 bis 200 Drehungen pro Meter wird die Bruchdehnung eines derart hergestellten Seiles nur unwesentlich verändert und gleichzeitig die Reißfestigkeit geringfügig erhöht.

Für die Reißkraft des gesamten Verstärkungsseiles hat es sich als vorteilhaft herausgestellt, wenn die Verdrehung der Stahldrähte und die Zwirnung der Garne gleiche Drehrichtung aufweisen.

Es hat sich als zweckmäßig erwiesen, daß die Fäden aus aromatischem Polyamid mit einem Gleitmittel beaufschlagt sind. Hierdurch kann die Ermüdungsneigung der Aramidfäden, die durch die äußere Reibung zwischen den Aramidfäden bzw. zwischen den Aramidfäden und den Stahldrähten erhöht wird, verringert werden. Als Gleitmittel kommen alle die Mittel infrage, die folgende Eigenschaften aufweisen : Der Gleiteffekt muß auch nach einer Wärmebehandlung bei ca. 140 bis 200 °C beispielsweise nach der Vulkanisation, vorhanden sein, das Gleitmittel darf keine chemische Aggresivität gegenüber Stahl und Aramid besitzen, also auch keine Korrosion bei Stahl hervorrufen, und darf sich nicht negativ auf die Haftung zwischen Verstärkungsseil und elastomerem Material auswirken. Ein geeignetes Gleitmittel ist beispielsweise ein Produkt mit der Bezeichnung PO 229 der Firma Akzo Chemie in Düren. Hierbei hat sich ein Anteil von 1 bis 10 Gew.-% an Gleitmittel bezogen auf das Gewicht der Fäden aus aromatischem Polyamid als günstig herausgestellt.

Als besonders günstig hat sich ein Verstärkungsseil mit 10 bis 40 Gew.-%, vorzugsweise 15 bis 25 Gew.-% Fäden aus aromatischem Polyamid erwiesen, weil ein solches Kombinations-Verstärkungsseil bezogen auf die Reißkraft ein wesentlich geringeres Metergewicht aufweist als ein Verstärkungsseil, welches nur aus Stahldrähten besteht.

Das erfindungsgemäße Verstärkungsseil hat vorzugsweise einen annähernd kreisförmigen Querschnitt.

Die durch die bisher beschriebenen Merkmale ausgezeichneten Komponenten lassen sich zu vielen Verstärkungskonstruktionen einsetzen. Es genügt schon, wenn beide Komponenten zu einem Seil zusammengefaßt werden, von denen wieder mehrere zusammengefaßt werden können. Auch ist es möglich, die Einzelkomponenten lagenweise im Verstärkungsseil anzuordnen, wobei eine Kernlage aus der ersten Komponente, welche beispielsweise aus einem einzigen Stahldraht, aus mehreren Stahldrähten, aus einer Litze, welche zwei oder mehr Stahldrähte enthält und/oder aus mehreren Litzen bestehen. Um diese Kernlage kann eine zweite Lage aus Fäden aus aromatischen Polyamiden angeordnet sein. Eine dritte Lage der ersten Komponente kann ebenfalls um die ersten beiden Lagen angeordnet sein.

Als besonders vorteilhaft hat es sich jedoch herausgestellt, wenn die Fäden aus aromatischem Polyamid im Kern angeordnet sind, um welchen die Stahldrähte gedreht sind. Vorzugsweise ist hierbei die Breite der Stahldrähte in Umfangsrichtung angeordnet. Um hierbei ein Verstärkungsseil mit annähernd kreisförmigem Querschnitt zu erreichen, ist es erforderlich, daß der Kern, welcher aus Fäden aus aromatischem Polyamid besteht, einen annähernd kreisförmigen Querschnitt aufweist. Dies gelingt vorzüglich, wie bereits weiter oben ausgeführt, durch Zwirnung der Fäden aus aromatischem Polyamid.

Die Anordnung von Stahldrähten in der Außenlage des Verstärkungsseiles hat sich als besonders zweckmäßig herausgestellt, weil die Stahldrähte, welche vorteilhaft mit Messing beschichtet sind, eine besonders gute Bindung zum elastomeren Material gewährleisten. Die Anordnung der Stahldrähte derart, daß die Breite der rechteckigen Querschnitt, dessen Kanten gerundet sind, aufweisenden Stahldrähte in Umfangsrichtung angeordnet ist, ergibt bei einem Kern mit nahezu kreisförmigem Querschnitt ein Verstärkungsseil, welches wiederum einen annähernd kreisförmigen Querschnitt aufweist. Durch die Rundung der Kanten des rechteckigen Querschnitts der Stahldrähte ergibt sich zwischen den Stahldrähten linienförmiger Kontakt, wodurch die Reibungsbeanspruchung zwischen zwei benachbarten Stahldrähten in günstiger Weise reduziert wird.

Überraschenderweise hat sich bei einem derartig aufgebauten erfindungsgemäßen Verstärkungsseil herausgestellt, daß bei einer Zugbelastung eines solchen Verstärkungsseiles die Dehnung der Stahldrähte fast ausschließlich über Materialdehnung erfolgt. Insofern ist der Anteil an Konstruktionsdehnung bei den Stahldrähten sehr gering — die Konstruktionsdehnung trägt nur mit 0,1 bis 0,2 % zur Gesamtreißdehnung bei —, wodurch gewährleistet ist, daß beide Komponenten des Verstärkungsseiles im Belastungsfalle auch im unteren Lastbereich gleichermaßen Zugkräfte aufnehmen. Durch die Anzahl der Drehungen, welche auf die Stahldrähte aufgebracht sind und günstigerweise zwischen 40 und 200 Drehungen pro Meter liegen, und durch die Zwirnung der Aramidfäden ergeben sich für beide Komponenten in etwa dieselben Bruchdehnungen, so daß beide Komponenten des erfindungsgemäßen Verstärkungsseiles bis zum Bruch tragende Funktion haben, und bei etwa gleicher Dehnung reißen. Bei einem derartig aufgebauten erfindungsgemäßen Verstärkungsseil addieren sich also auch die Reißkräfte. Somit ist eine optimale Ausnutzung beider Komponenten des Verstärkungsseiles gewährleistet.

Ein Verstärkungsseil, bei dem die Fäden aus aromatischem Polyamid im Kern angeordnet sind, um welchen die Stahldrähte gedreht sind, weist günstigerweise mindestens fünf, vorzugsweise zwölf Stahldrähte auf. Die günstigste Anzahl an Stahldrähten mit rechteckigem Querschnitt ist davon abhängig, welche Festigkeit und welche Steifigkeit das Verstärkungsseil bei vollständiger Abdeckung der Aramidfäden durch die Stahldrähte aufweisen soll.

Ein solches Verstärkungsseil kann zusätzlich mit einem weiteren Umschlingungsdraht wendelförmig umwickelt sein, wobei auch dieser Umschlingungsdraht ein Stahldraht sein kann, welcher einen annähernd rechteckigen Querschnitt, dessen Kanten gerundet sind, aufweist.

Die erfindungsgemäßen Verstärkungsseile weisen in der Regel eine spezifische Zugfestigkeit von 500 bis 900 N/ktex auf. Die spezifische Zugfestigkeit ist die Zugfestigkeit des Verstärkungsseiles bezogen auf das Metergewicht.

Die bevorzugten Verwendungsgebiete der erfindungsgemäßen Verstärkungsseile liegen bei der Herstellung von Fahrzeugluftreifen, Transportbändern und Treibriemen. Die Verstärkungsseile haben sich besonders bewährt beim Einsatz im Gürtel eines Radialreifens für Fahrzeuge, insbesondere für LKw's, Erdbewegungsmaschinen, Flugzeuge oder Traktoren.

Durch den gleichzeitigen Einsatz der beiden Komponentenmaterialien ergibt sich erfindungsgemäß ein Verstärkungsseil, welches die guten Eigenschaften beider Materialien besitzt.

Ein solches Verstärkungsseil besitzt hohe Festigkeit, genügend Steifigkeit und somit die erforderliche Formstabilität im elastomeren Erzeugnis, gute Ermüdungseigenschaften und gute Wärmeleitfähigkeit. Die Korrosionsneigung ist wesentlich verringert. Reibkorrosion findet praktisch nicht mehr statt. Das Gewicht pro Meter Wird bei gleicher Seilfestigkeit gegenüber Verstärkungsseilen aus Stahldrähten erheblich geringer, wodurch beispielsweise beim Einsatz erfindungsgemäßer Verstärkungsseile in Fahrzeugluftreifen die Fliehkräfte extrem erniedrigt werden.

Die Erfindung wird anhand der nachfolgenden Figuren und Beispiele näher erläutert. Es zeigen :

Figur 1 schematisch ein Kraft-Dehnungs-Diagramm eines herkömmlichen Verstärkungskordes aus Stahl und Aramid, sowie deren Einzelkomponenten,

Figur 2 schematisch ein Kraft-Dehnungs-Diagramm von drei verscheiden behandelten Stahldrähten,

Figur 3 schematisch ein Kraft-Dehnungs-Diagramm eines erfindungsgemäßen Verstärkungsseils und dessen Komponenten,

Figur 4 ein Kraft-Dehnungs-Diagramm eines erfindungsgemäßen Verstärkungsseils und dessen Komponenten,

Figur 5 ein Kraft-Dehnungs-Diagramm eines erfindungsgemäßen Verstärkungsseiles gemäß Beispiel 1,

Figur 6 ein Kraft-Dehnungs-Diagramm eines erfindungsgemäßen Verstärkungsseiles gemäß Beispiel 2,

Figur 7 einen Querschnitt eines bekannten Verstärkungsseiles, welches aus Stahldrähten besteht,

Figur 8 den Querschnitt eines erfindungsgemäßen Verstärkungsseiles gemäß Beispiel 2

Figur 9 schematisch den Versuchsaufbau bei der Bestimmung der Luftdurchlässigkeit des eingebetteten Verstärkungsseiles

Figur 10 einen Schnitt durch den Prüfkörper, welcher bei der Bestimmung der Luftdurchlässigkeit eingesetzt wird.

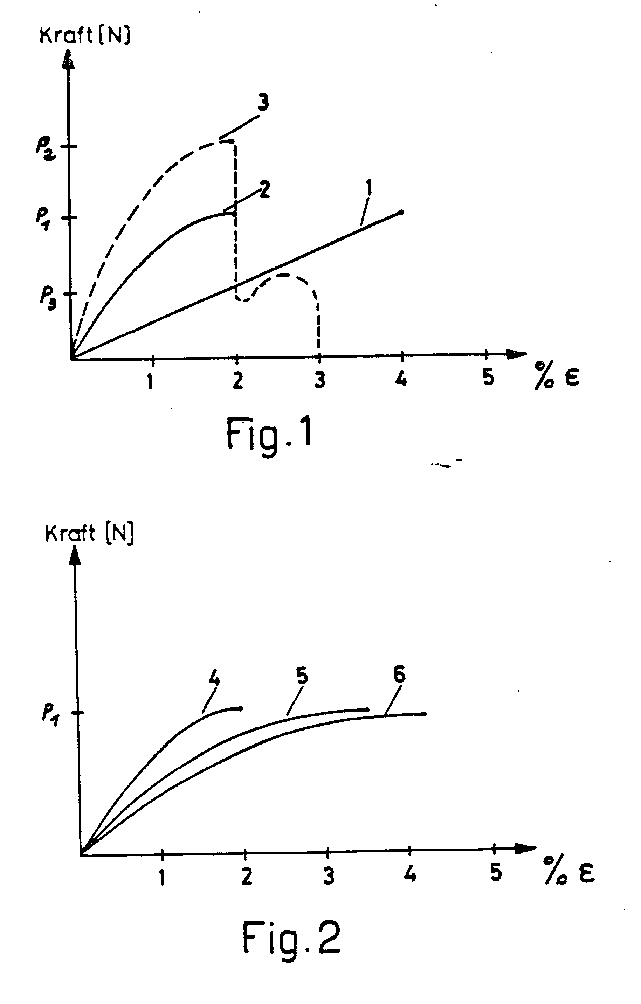

In Figur 1 ist schematisch ein Kraft-Dehnungs-Diagramm eines herkömmlichen Verstärkungscordes aus Stahl und Aramid, sowie dessen Einzelkomponenten dargestellt. Bei Kurve 1 handelt es sich um ein typisches Kraft-Dehnungs-Verhalten von Fäden aus p-aromatischen Polyamiden, bei Kurve 2 um das eines üblichen Stahldrahtes. Die gestrichelt gezeichnete Kurve 3 zeigt das typische Kraft-Dehnungs-Verhalten eines Verstärkungsseiles, bestehend aus Aramid-Fäden gemäß Kurve 1 und Stahldraht gemäß Kurve 2.

Der Stahldraht und die Aramid-Fäden haben eine Reißkraft $P_1$, wobei der Stahldraht eine Bruchdehnung von etwa 2 % und die Aramid-Fäden eine Bruchdehnung von 4 % aufweist. Bei dem aus diesen beiden Komponenten bestehenden Verstärkungsseil ergibt sich zunächst ein Kraft-Dehnungs-Verhalten, bei welchem sich die Einzelkräfte der Komponenten bei den entsprechenden Dehnungen addieren. Ist eine Dehnung von etwa 2 % erreicht, ergibt sich für das Verstärkungsseil eine Kraft $P_2$, welche so groß ist wie die Summe der Kräfte $P_1$ und $P_3$. Da nun die Bruchdehnung der Stahldrähte erreicht ist, fällt die Kraft bei weiterer Dehnung schnell ab. Die Reißkraft der Aramidfäden wird somit nicht ausgenutzt.

In Figur 2 ist schematisch das Kraft-Dehnungs-Verhalten von drei verschieden behandelten Stahldrähten dargestellt. Bei Kurve 4 handelt es sich um einen Stahldraht, welcher nahezu einen rechteckigen Querschnitt aufweist, jedoch ungedreht ist. Wenn ein solcher Stahldraht mit etwa 90 Drehungen pro Meter versehen ist, ergibt sich für diesen gedrehten Stahldraht ein Kraft-Dehnungs-Verhalten gemäß Kurve 5, bei etwa 150 Drehungen pro Meter ein Verhalten gemäß Kurve 6. Aus Kurve 4 ist zu erkennen, daß sich der ungedrehte rechteckige Stahldraht genauso verhält wie der Stahldraht gemäß Kurve 2. Er besitzt eine Reißkraft von $P_1$ und eine Bruchdehnung von etwa 2 %. Wird ein solcher Stahldraht mit 90 Drehungen pro Meter versehen, zeigt sich, daß die Bruchdehnung auf etwa 3,5 % erhöht wurde, wobei gleichzeitig die Reißkraft $P_1$ nur geringfügig abfällt auf einen Wert, der etwa bei 97 % von $P_1$ liegt. Wird derselbe Stahldraht mit 150 Drehungen pro Meter versehen, ergibt sich eine Bruchdehnung von etwa 4 %, wobei die Reißkraft auf etwa 96 % von $P_1$ abfällt.

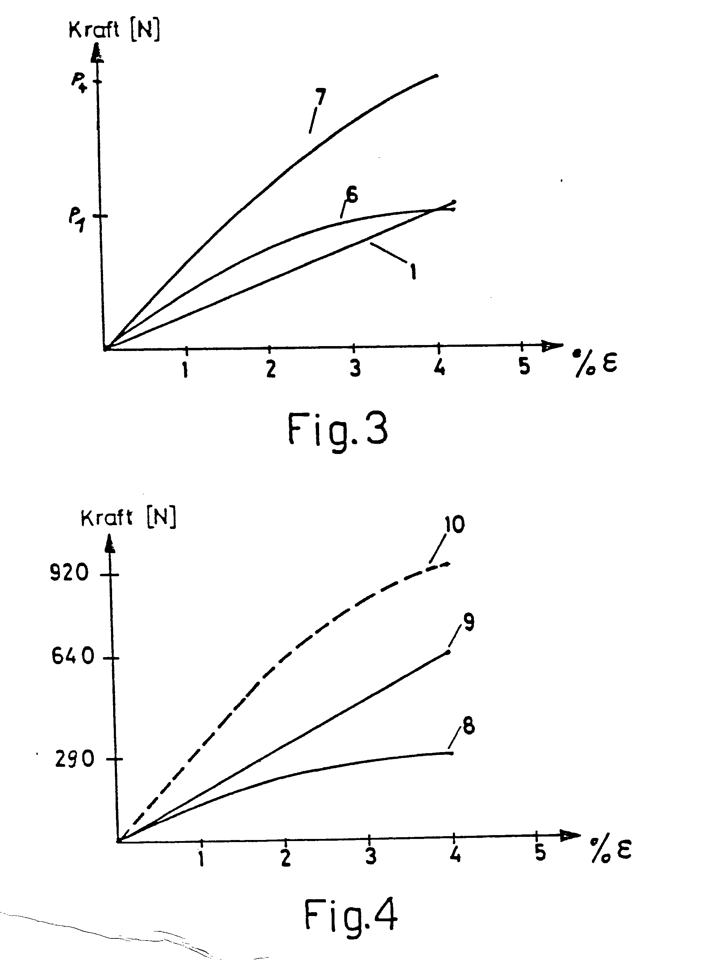

Wird nun ein solcher gedrehter, annähernd rechteckigen Querschnitt aufweisender Stahldraht in einem Verstärkungsseil mit Aramidfäden eingesetzt, ergibt sich ein Kraft-Dehnungs-Verhalten gemäß Kurve 7 in Figur 3. In dieser Figur 3 sind zur Veranschaulichung Kurve 1 (Kraft-Dehnungs-Verhalten der Aramid-Fäden) und Kurve 6 (Kraft-Dehnungs-Verhalten des mit 150 Umdrehungen pro Meter beaufschlagten Stahldrahtes mit annähernd rechteckigem Querschnitt) dargestellt. Kurve 7 zeigt anschaulich, daß die Reißkraft $P_4$ des Verstärkungsseiles gleich ist wie die Summe der Reißkräfte der beiden Einzelkomponenten, die beide bei $P_1$ liegen. Also gilt $P_2 = 2P_1$, wobei die Bruchdehnung der Verstärkungsseiles etwa bei 4 % liegt.

In Fig. 4 ist das Kraft-Dehnungs-Verhalten eines erfindungsgemäßen Verstärkungsseiles dargestellt, welches aus einer ersten Komponente, einem Stahldraht, welcher von einem runden Draht mit 0,25 mm durch Flachwalzen auf 0,2 mm Dicke hergestellt wurde, wobei die Querschnittsfläche des flachgewalzten Drahtes etwa der des vorherigen runden Drahtes entspricht, und einer zweiten Komponente, einem Faden aus p-aromatischen Polyamiden mit einer Stärke von 2 × 1 680 dtex f 1 000 (2 Garne mit einem Titer von 1 680 dtex, wobei jedes Garn aus 1 000 Filamenten besteht), besteht. Beide Komponenten wurden mit 60 Umdrehungen pro Meter versehen. Hierbei ergab sich für den Stahldraht eine Bruchdehnung von etwa 4 % und eine Reißkraft von 290 N und für den Aramidfaden ebenfalls eine Bruchdehnung von etwa 4 % und eine Reißkraft von 640 N. Das aus diesen beiden Komponenten bestehende Verstärkungsseil hatte ebenfalls eine Bruchdehnung von etwa 4 %, wobei dei Reißkraft einen Wert von 920 N erreichte. Das verwendete Meßinstrument zur Messung der Zugkraft hatte im Bereich von 1 000 N eine Meßgenauigkeit von etwa ± 10 N, so daß davon ausgegangen werden kann, daß die Reißkraft des Verstärkungsseiles (920 N) gleich der Summe der Reißkräfte der Einzelkomponenten (640 N und 290 N) ist.

Bei einem solchen Verstärkungsseil haben also beide Komponenten des Verstärkungsseiles bis zum Bruch tragende Funktion.

## Beispiele

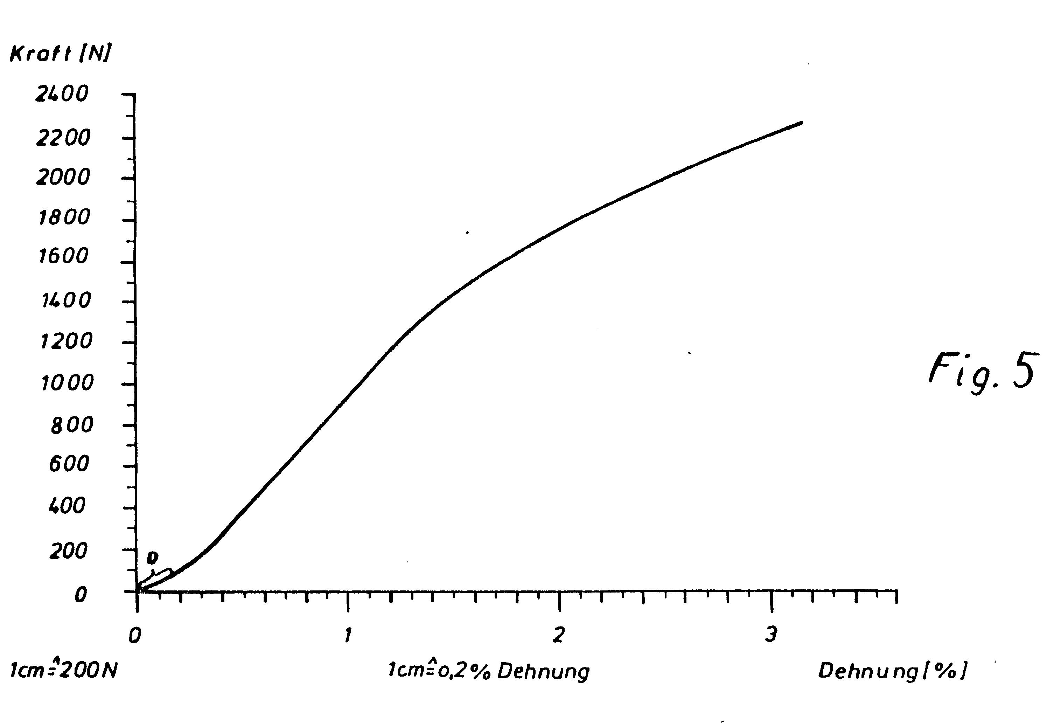

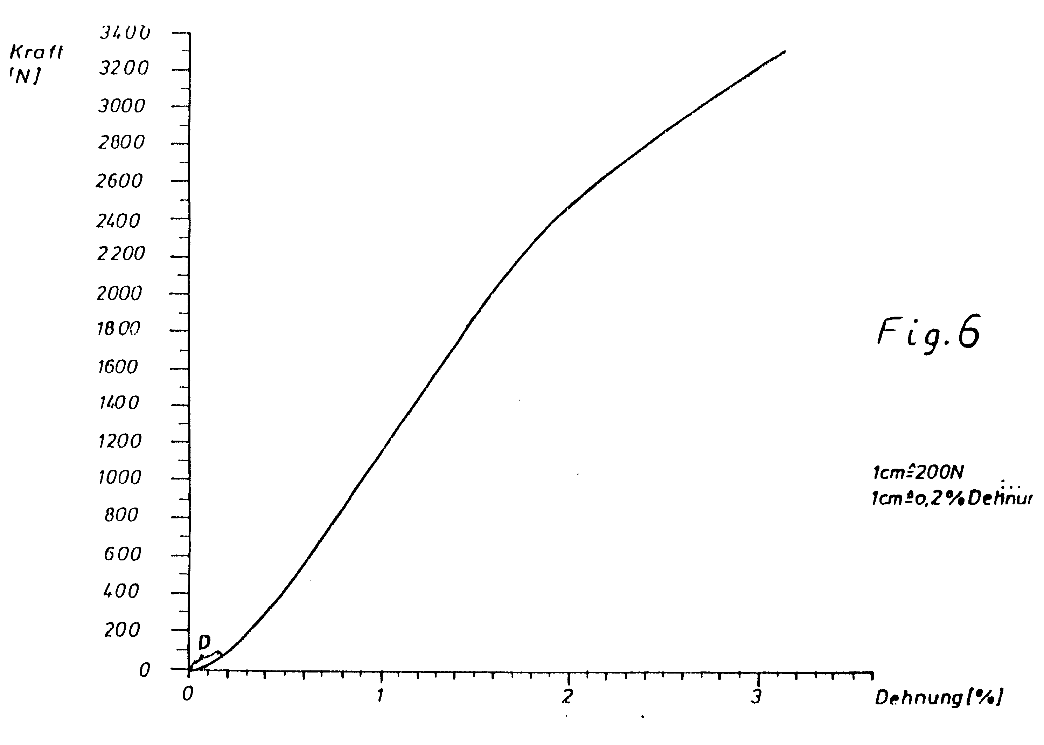

In den nachfolgenden Tabellen I und II werden jeweils ein erfindungsgemäßes Verstärkungsseil verglichen mit einem Standardseil aus runden Stahldrähten bzw. mit einem Aramidcord. Das Kraft-Dehnungs-Verhalten des erfindungsgemäßen Verstärkungsseiles gemäß Tabelle I ist in Figur 5, das des erfindungsgemäßen Verstärkungsseiles gemäß Tabelle II in Figur 6 dargestellt. Alle in den verschiedenen Verstärkungsseilen eingesetzten Stahldrähte weisen einen Kohlenstoffgehalt von 0,7 % und eine Zugfestigkeit der runden Drähte von 2 700 N/mm² auf. In der Zeile « Konstruktionsbezeichnung » bedeutet Ar Aramid. Die Bezeichnung 0,22 F bedeutet, daß es sich um Stahldrähte mit annähernd rechteckigem Querschnitt, dessen Kanten gerundet sind, handelt, welche durch Flachwalzen eines Runddrahtes von 0,22 mm Durchmesser entstehen, wobei die Querschnittsfläche des runden Drahtes annähernd dieselbe ist wie die des Stahldrahtes mit rechteckigem Querschnitt, dessen Kanten gerundet sind. In der Zeile « Stahldrahtquerschnitt » wird für die Stahldrähte mit annähernd rechteckigem Querschnitt, dessen Kanten gerundet sind, angegeben von welchem Durchmesser die Runddrähte auf welche Dicke die Stahldrähte gewalzt wurden (beispielsweise wird ein Runddraht mit 0,22 mm Durchmesser auf eine Dicke von 0,17 mm gewalzt, siehe Tabelle I).

Die Bezeichnung « 4 × 1 680 dtex 1 000 » bedeutet, daß vier Filamentgarne mit einem Metergewicht von 1 680 dtex und 1 000 Fäden eingesetzt wurden. Die Bezeichnung 50 Z/140 S bedeutet, daß Einzelfäden bzw. Einzelstahldrähte in Z-Richtung zunächst mit 50 Umdrehungen pro Meter zu Filamentgarnen bzw. Litzen gezwirnt wurden, wonach mehrere Filamentgarne bzw. Litzen in S-Richtung mit 140 Umdrehungen pro Meter zusammengezwirnt wurden.

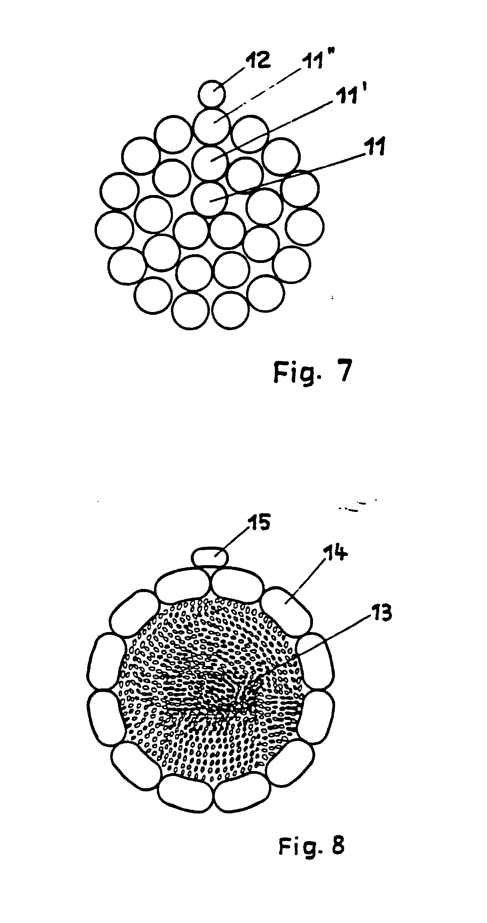

Ein Querschnitt des in Tabelle II aufgeführten Vergleichsseiles aus Stahldrähten ist in Figur 7 dargestellt. In diesem Querschnitt ist ersichtlich, daß zunächst drei runde Drähte 11 den Kern bilden, um den neun runde Drähte 11' in einer zweiten Lage und darum wiederum fünfzehn runde Drähte 11" in der dritten Lage angeordnet sind. Alle runden Stahldrähte 11, 11' bzw. 11" besitzen, wie aus Tabelle II ersichtlich, einen Durchmesser von 0,22 mm. Um das gesamte Seil ist ein Umschlingungsdraht 12 mit einem Durchmesser von 0,15 mm angeordnet, welcher das Seil wendelförmig umwickelt (nicht dargestellt).

Das in Tabelle II aufgeführte erfindungsgemäße Verstärkungsseil ist in Figur 8 dargestellt. Hierbei sind mit 13 die Einzelfäden der zweiten Komponente aus aromatischem Polyamid angedeutet. Der Aufbau der zweiten Komponente ist folgendermaßen : Zunächst wurden 1 000 Fäden von aromatischem Polyamid und einem Gewicht von 1 680 dtex zu einem Filamentgarn mit 50 Umdrehungen pro Meter in Z-Richtung zusammengezwirnt. Je zwei solcher Filamentgarne wurden wiederum zusammengezwirnt, und zwar mit 60 Drehungen pro Meter in S-Richtung. Drei aus je zwei solcher Filamentgarne bestehende Stränge wurden dann zusammengezwirnt mit 110 Drehungen in S-Richtung. Die Differenz zwischen den Zwirndrehungen der Filamentgarne und den Zwirndrehungen der Fäden aus aromatischem Polyamid beträgt also 120 Umdrehungen pro Meter. Um die Fäden der ersten Komponente sind zwölf Stahldrähte 14 mit annähernd rechteckigem Querschnitt, dessen Kanten gerundet sind, angeordnet, wobei die Breite der Stahldrähte in Umfangsrichtung angeordnet ist. Es ergibt sich hiermit ein Verstärkungsseil mit annähernd kreisförmigem Querschnitt, welches nach außen mit einer Lage von Stahldrähten mit rechteckigem Querschnitt, dessen Kanten gerundet sind, abschließt. Dieses Verstärkungsseil ist mit einem Umschlingungsdraht 15 wendelförmig umwickelt, welcher ebenfalls einen rechteckigen Querschnitt aufweist, dessen Kanten gerundet sind. Die Stahldrähte 14 wurden in der Art hergestellt, daß ein Runddraht mit 0,25 mm Durchmesser auf 0,19 mm Dicke gewalzt wurde. Der Umschlingungsdraht 15 wurde durch Walzen eines 0,15 mm im Durchmesser aufweisenden Runddraht auf 0,10 mm Dicke hergestellt.

Wie sich aus Tabelle I und Tabelle II ergibt, wird durch ein erfindungsgemäßes Verstärkungsseil die Bruchdehnung eines reines Aramidcordes nahezu erreicht, während die Bruchdehnung des aus Stahldrähten bestehenden Vergleichseiles um etwa ein Drittel geringer ist.

Zur Berechnung der Reißkräfte muß folgendes berücksichtigt werden : Die Fadenzahl des zum Vergleich angegebenen reinen Aramid cordes ist doppelt so groß wie die Fadenzahl der Aramidfäden im erfindungsgemäßen Verstärkungsseil. Insofern kann auch der Reißkraftanteil der Aramidfäden im erfindungsgemäßen Verstärkungsseil nur halb so groß sein wie die Reißkraft des vergleichsweise angegebenen Aramidcordes. In Tabelle I beträgt die Reißkraft des vergleichsweise angegebenen Aramidcordes 2 400 N, so daß beim erfindungsgemäßen Verstärkungsseil der Reißkraftanteil der Aramidfäden 1 200 N betragen muß (Tabelle II : Aramidcord : 3 600 N, Reißkraftanteil Aramid im erfindungsgemäßen Verstärkungsseil : 1 800 N). Die Reißkraft des Vergleichsseiles aus Stahldrähten beträgt in Tabelle I 1 700 N bei einem Metergewicht von 6,14 ktex, wodurch sich eine spezifische Reißfestigkeit von 277 N/ktex ergibt. Das Metergewicht des erfindungsgemäßen Verstärkungsseiles beträgt 4,45 ktex, wobei der Anteil an Stahl 83 % beträgt, so daß das Metergewicht der im erfindungsgemäßen Verstärkungsseil enthaltenen Stahldrähte 3,69 ktex beträgt. Da, wie bereits ausgeführt, durch die Drehung der Stahldrähte mit rechteckigem Querschnitt die Reißkraft in etwa erhalten bleibt, wobei gleichzeitig die Dehnung erhöht wird, muß der Reißkraftanteil der Stahldrähte im erfindungsgemäßen Verstärkungsanteil gleich sein dem Metergewicht der Stahldrähte im erfindungsgemäßen Verstärkungsseil mal der spezifischen Reißfestigkeit des Vergleichsseiles aus Stahldrähten : Die Reißkraft der Stahldrähte mit annähernd rechteckigem Querschnitt im erfindungsgemäßen Verstärkungsseil muß also $3,69 \times 277 = 1\,023$ N betragen (Tabelle II : spezifische Reißfestigkeit des Vergleichsseiles aus Stahldrähten = 320 N/ktex, Metergewicht des erfindungsgemäßen Verstärkungsseiles = 5,9 ktex, wobei der Stahlanteil 81 % beträgt ; Metergewicht der Stahldrähte mit rechteckigem Querschnitt im erfindungsgemäßen Verstärkungsseil : 4,78 ktex — Reißkraftanteil der Stahldrähte mit annähernd rechteckigem Querschnitt im erfindungsgemäßen Verstärkungsseil : 1 530 N). Die Addition der Reißkräfte der beiden Komponenten ergeben demnach gemäß Tabelle I eine Reißkraft des erfindungsgemäßen Verstärkungsseiles von 1 200 N (Aramidanteil) + 1 023 N (Stahlanteil) = 2 223 N, wobei sich aus Tabelle I ergibt, daß die Reißkraft des erfindungsgemäßen Verstärkungsseiles höher, nämlich bei 2 400 N liegt. (Tabelle II : 1 800 N Aramidanteil + 1 530 N Stahlanteil = 3 330 N verglichen mit 3 500 N als Reißkraft für das erfindungsgemäße Verstärkungsseil).

In Tabelle I und II sind für die jeweils dort aufgeführten Verstärkungsseile bzw. Corde zusätzlich angegeben die Werte für die Luftdurchlässigkeit im vulkanisierten Zustand sowie für die Biegesteifigkeit. Die Biegesteifigkeit wird nach der Methode gemessen, welche beschrieben ist in : BISFA, « Internationally agreed methods for testing steel tyre cords », 1981, Chapter H., « Determination of stiffness ».

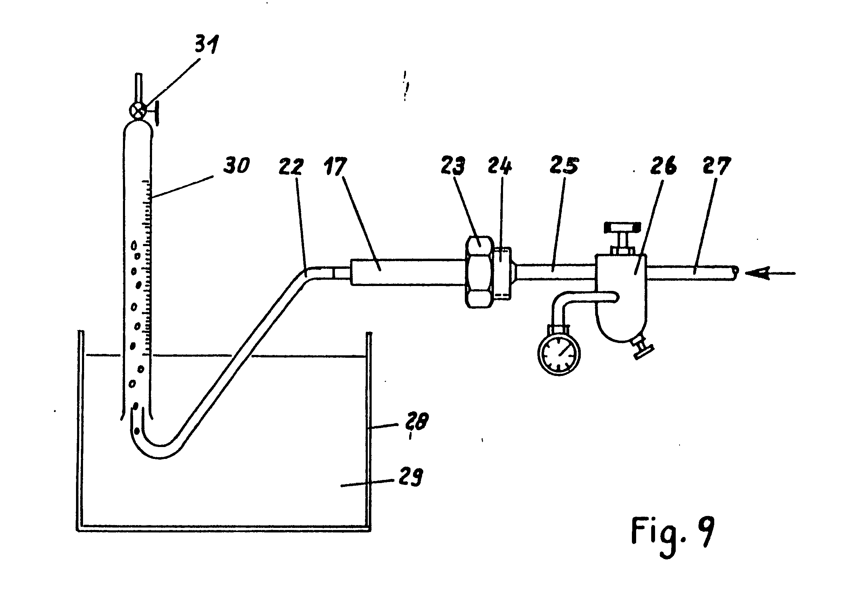

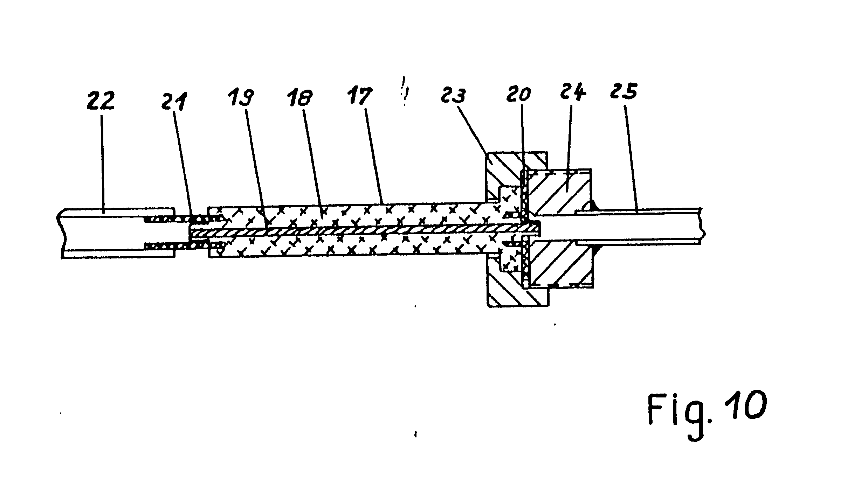

Die Luftdurchlässigkeit im vulkanisierten Zustand ist ein Maß für die Güte der Einbettung eines Verstärkungsseiles bzw. Verstärkungscordes in Gummi. Die Prüfmethode der Luftdurchlässigkeit im vulkanisierten Zustand wird anhand der Figuren 9 und 10 näher erläutert.

Ein 7,5 cm langes Verstärkungsseil 19 wird zu diesem Zweck im Gummi 18 eingebettet, wobei das Verstärkungsseil 19 an beiden Stirnseiten des Prüfkörpers 17 sichtbar ist. Gleichzeitig werden in jedem Prüfkörper 17 eine Dichtungsscheibe 20 und ein Rohranschlagstück 21 in den Gummi 18 eingebettet. Mit der Überwurfmutter 23 wird der Prüfkörper 17 gasdicht mit einem Druckluftanschlußstück 24 angeschlossen. Das Druckluftanschlußstück 24 ist über ein Übergangsstück 25, ein Druckreduzierventil 26 und eine Druckluftleitung 27 an eine (nicht dargestellte) Druckluftquelle angeschlossen. Am Rohranschlußstück 21 ist ein Rohr 22 gasdicht angeschlossen, welches mit dem freien Ende in eine mit Wasser 29 gefüllte Wanne 28 eingetaucht ist. Das freie Ende ist nach oben gebogen und befindet sich unter der Öffnung eines bei Beginn des Versuches bis zur Nullmarke mit Wasser gefüllten Meßzylinders 30, welcher ebenfalls in das Wasserbad 28, 29 eingetaucht ist. Mit dem Ventil 31 läßt sich die Höhe der Wassersäule im Meßzylinder 30 einstellen. Bei Beginn der Luftdurchlässigkeitsbestimmung wird über das Druckreduzierventil 26 ein Druck von 1 bar eingestellt. Kann durch den Prüfkörper infolge einer nicht vollständigen Einbettung des Verstärkungsseiles 19 in die Gummimasse 18 Luft eindringen, so steigen die entstehenden Luftblasen im Meßzylinder 30 auf. Gemessen wird die sich im Meßzylinder 30 ansammelnde Luftmenge pro Zeiteinheit.

(Siehe Tabellen Seite 8 ff.)

Tabelle I

| | | erfindungsgemäßes Verstärkungsseil | Vergleich: Standardseil aus Stahldrähten | Vergleich: Aramidcord |
|---|---|---|---|---|
| Konstruktionsbezeichnung | | 4x1680Ar+12x0,22F | 3x0,20+6x0,38 | 8x1680Ar |
| Stahldrahtquerschnitt | | 0,22mm → 0,17 mm | Runddraht | – |
| Anzahl der Stahldrähte | | 12 | 9 | – |
| Verdrehungen pro m der Stahldrähte | | 70 S | 100 S/50 Z | – |
| Aufbau der Aramid-Fäden | | 4x1680dtex f 1000 | – | 8x1680dtex f 1000 |
| Zwirndrehungen pro m der Aramid-Fäden | | 50 Z/140 S | – | 50 Z/140 S |
| Gewichtsanteil Aramid/Stahl | %/% | 17/83 | 0/100 | 100/0 |
| Seil-Reißkraft | N | 2400 | 1700 | 2400 |
| m-Gewicht | ktex | 4,45 | 6,14 | 1,4 |
| spez.Reißfestigkeit | N/ktex | 539 | 277 | 1714 |
| Seildurchmesser | mm | 1,23 | 1,18 | 1,40 |
| Seilfestigkeit bezogen auf Seildurchmesser | N/mm | 1951 | 1440 | 1714 |
| Bruchdehnung | % | 3,1 | 2,0 | 3,2 |
| Luftdurchlässigkeit im vulkanisierten Zustand | ml/min | 0 | 25 | 0 |
| Biegefestigkeit | S.U. | 48 | 170 | ∼ 0,1 |

Tabelle II

| | | erfindungsgemäßes Verstärkungsseil | Vergleich: Standardseil aus Stahldrähten | Vergleich: Aramidcord |
|---|---|---|---|---|
| Konstruktionszeichnung | | 3x2x1680 Ar+12x0,25 F+ 0,15 F | 3+9+15x0,22+0,15 | 3x4x1680 Ar |
| Stahldrahtquerschnitt | | 0,25 mm → 0,19 mm 0,15 mm → 0,10 mm | Runddraht | – |
| Anzahl der Stahldrähte | | 12 x 0,25 F 1 x 0,15 F | 27 x 0,22 rund 1 x 0,15 rund | – |
| Verdrehungen pro m der Stahldrähte | | 50 S/ | 16 S/83 S/56 Z | – |
| Aufbau der Aramid-Fäden | | 6x1680 dtex f 1000 | – | 12x 1680 dtex f 1000 |
| Zwirndrehungen pro m der Aramid-Fäden | | 50 Z/60 S/110 S | – | 50 Z/60 S/60 S |
| Gewichtsanteil Aramid/Stahl | %/% | 19/81 | 0/100 | 100/0 |
| Seil-Reißkraft | N | 3500 | 2700 | 3600 |
| m-Gewicht | ktex | 5,9 | 8,44 | 2,10 |
| spez. Reißfestigkeit | N/ktex | 593 | 320 | 1714 |
| Seildurchmesser | mm | 1,7 | 1,6 | 1,75 |
| Seilfestigkeit bezogen auf Seildurchmesser | N/mm | 2059 | 1688 | 2057 |
| Bruchdehnung | % | 3,1 | 1,95 | 3,15 |
| Luftdurchlässigkeit im vulkanischen Zustand | ml/min | 0 | 80 | 0 |
| Biegesteifigkeit | S.U. | 94 | 120 | ∿0,1 |

EP 0 126 965 B1

Wie aus Tabellen I und II ersichtlich ist, werden erfindungsgemäß Verstärkungsseile zur Verfügung gestellt, die die Vorteile eines Aramidcordes mit den Vorteilen eines aus Stahldrähten bestehenden Cordes miteinander verbinden. Die Seilfestigkeit bezogen auf den Durchmesser des Verstärkungsseiles entspricht der des reinen Aramidcordes, während die Seilfestigkeit bezogen auf den Durchmesser eines aus Stahldrähten bestehenden Verstärkungsseiles wesentlich geringer ist. Die spezifische Reißfestigkeit (bezogen auf das Metergewicht des Verstärkungsseiles) hat sich gegenüber einem Verstärkungsseil aus Stahldrähten fast verdoppelt. Die Luftdurchlässigkeit im vulkanisierten Zustand ist bei einem erfindungsgemäßen Verstärkungscord nicht gegeben, das heißt, die Einbindung des erfindungsgemäßen Verstärkungsseiles in Gummi ist hervorragend. Die Biegesteifigkeit des erfindungsgemäßen Verstärkungsseiles ist gering, wodurch der Einbau der erfindungsgemäßen Verstärkungsseile in Luftreifen wesentlich vereinfacht wird. Wie aus den Kraft-Dehnungs-Kurven der erfindungsgemäßen Verstärkungsseile gemäß Tabelle I bzw. Tabelle II, welche in den Figuren 5 und 6 dargestellt sind, hervorgeht, ist der konstruktionsbedingte Dehnungsanteil der erfindungsgemäßen Verstärkungsseile vernachlässigbar klein. Der konstruktionsbedingte Dehnungsanteil ist in den Figuren 5 und 6 jeweils mit D bezeichnet und beträgt in beiden Fällen weniger als 0,1 %.

Werden die Aramidfäden vor Einbindung in das Verstärkungsseil mit Gleitmittel getränkt, ergibt sich für die erfindungsgemäßen Verstärkungsseile ein ausgezeichnetes Ermüdungsverhalten, das heißt, daß bei Aramidcorden bekannte frühzeitige Einsetzen von Ermüdungsbrüchen wird durch die Tränkung mit Gleitmittel verhindert.

## Patentansprüche

1. Verstärkungsseil aus mindestens zwei Komponenten, wobei eine erste Komponente aus Stahldrähten und eine zweite Komponente aus Fäden aus aromatischen Polyamiden besteht, dadurch gekennzeichnet, daß bei der ersten Komponente jeder Stahldraht einen annähernd rechteckigen Querschnitt, dessen Kanten gerundet sind, aufweist und verdreht ist, und daß die Fäden aus aromatischem Polyamid miteinander zu einem Filamentgarn verzwirnt sind.

2. Verstärkungsseil nach Anspruch 1, dadurch gekennzeichnet, daß die Stahldrähte aus gezogenem Stahl mit 0,6 bis 0,9 Gew.-% C bestehen und als gezogene Runddrähte eine Zugfestigkeit von 2 500 bis 3 500 N/mm² aufweisen.

3. Verstärkungsseil nach Anspruch 1 oder 2, dadurch gekennzeichnet, daß jeder Stahldraht 40 bis 200 Drehungen pro Meter aufweist.

4. Verstärkungsseil nach einem oder mehreren der Ansprüche 1 bis 3, dadurch gekennzeichnet, daß nebeneinander liegende Stahldrähte in linienförmigem Kontakt angeordnet sind.

5. Verstärkungsseil nach einem oder mehreren der Ansprüche 1 bis 4, dadurch gekennzeichnet, daß die Querschnittsfläche jedes Stahldrahtes zwischen 0,03 und 0,2 mm² liegt.

6. Verstärkungsseil nach einem oder mehreren der Ansprüche 1 bis 5, dadurch gekennzeichnet, daß das Verhältnis von Breite zu Dicke jedes Stahldrahtquerschnitts zwischen 1 und 4 liegt.

7. Verstärkungsseil nach einem oder mehreren der Ansprüche 1 bis 6, dadurch gekennzeichnet, daß jeweils zwei oder mehr Stahldrähte miteinander verdreht sind.

8. Verstärkungsseil nach einem oder mehreren der Ansprüche 1 bis 7, dadurch gekennzeichnet, daß zwei oder mehr gezwirnte Filamentgarne aus Fäden aus aromatischem Polyamid miteinander verzwirnt sind, wobei die Drehrichtung der Fäden in den Filamentgarnen entgegengesetzt zur Drehrichtung der Filamentgarne gerichtet ist, und die Anzahl der Zwirndrehungen der Garne größer ist als die Anzahl der Zwirndrehungen der Fäden.

9. Verstärkungsseil nach Anspruch 8, dadurch gekennzeichnet, daß die Differenz zwischen den Zwirndrehungen der Filamentgarne und den Zwirndrehungen der Fäden aus aromatischem Polyamid bei Werten von 50 bis 200 Drehungen pro Meter liegt.

10. Verstärkungsseil nach Anspruch 8 oder 9, dadurch gekennzeichnet, daß die Verdrehung der Stahldrähte und Zwirnung der Garne gleiche Drehrichtung aufweisen.

11. Verstärkungsseil nach einem oder mehreren der Ansprüche 1 bis 10, dadurch gekennzeichnet, daß die Fäden aus aromatischem Polyamid mit einem Gleitmittel beaufschlagt sind.

12. Verstärkungsseil nach einem oder mehreren der Ansprüche 1 bis 11 mit 10 bis 40 Gew.-%, vorzugsweise 15 bis 25 Gew.-% Fäden aus aromatischem Polyamid.

13. Verstärkungsseil nach einem oder mehreren der Ansprüche 1 bis 12 mit einem annähernd kreisförmigen Querschnitt.

14. Verstärkungsseil nach einem oder mehreren der Ansprüche 1 bis 13, dadurch gekennzeichnet, daß die Fäden (13) aus aromatischem Polyamid im Kern angeordnet sind, um welchen die Stahldrähte (14) gedreht sind.

15. Verstärkungsseil nach Anspruch 14, dadurch gekennzeichnet, daß die Breitseite der Stahldrähte (14) in Umfangsrichtung angeordnet ist.

16. Verstärkungsseil nach Anspruch 14 oder 15 mit mindestens fünf Stahldrähten.

17. Verstärkungsseil nach Anspruch 16 mit zwölf Stahldrähten (14).

18. Verstärkungsseil nach einem oder mehreren der Ansprüche 1 bis 17 wendelförmig umwickelt mit einem Umschlingungsdraht (15).

19. Verstärkungsseil nach Anspruch 18, dadurch gekennzeichnet, daß der Umschlingungsdraht (15) ein Stahldraht ist, welcher einen annähernd rechteckigen Querschnitt, dessen Kanten gerundet sind, aufweist.

20. Verstärkungsseil nach einem oder mehreren der Ansprüche 1 bis 19 mit einer spezifischen Zugfestigkeit von 500 bis 900 N/ktex.

21. Verwendung der Verstärkungsseile nach einem oder mehreren der Ansprüche 1 bis 20 zur Herstellung von Fahrzeugluftreifen, Transportbändern und Treibriemen.

22. Verwendung der Verstärkungsseile nach einem oder mehreren der Ansprüche 1 bis 20 im Gürtel eines Radialreifens für Fahrzeuge, insbesondere für LkW's, Erdbewegungsmaschinen, Flugzeuge oder Traktoren.

23. Luftreifen, dadurch gekennzeichnet, daß er Verstärkungsseile gemäß einem oder mehreren der Ansprüche 1 bis 20 enthält.

## Claims

1. A reinforcing cable of at least two components, a first component consisting of steel wires and a second component of filaments of aromatic polyamides, characterized in that, in the first component, each steel wire has an approximately rectangular cross-section rounded-off at the corners and is twisted and in that the filaments of aromatic polyamide are twisted with one another to form a filament yarn.

2. A reinforcing cable as claimed in claim 1, characterized in that the steel wires consist of drawn steel containing 0.6 to 0.9 % by weight C and, as drawn round wires, have a tensile strength of 2 500 to 3 500 N/mm².

3. A reinforcing cable as claimed in claim 1 or 2, characterized in that each steel wire has 40 to 200 twists per metre.

4. A reinforcing cable as claimed in one or more of claims 1 to 3, characterized in that steel wires lying adjacent one another are arranged in linear contact.

5. A reinforcing cable as claimed in one or more of claims 1 to 4, characterized in that the cross-sectional area of each steel wire is between 0.03 and 0.2 mm².

6. A reinforcing cable as claimed in one or more of claims 1 to 5, characterized in that the width-to-thickness ratio of each steel wire cross-section is between 1 and 4.

7. A reinforcing cable as claimed in one or more of claims 1 to 6, characterized in that two or more steel wires are twisted with one another.

8. A reinforcing cable as claimed in one or more of claims 1 to 7, characterized in that two or more twisted filament yarns of filaments of aromatic polyamide are twisted with one another, the direction of twist of the filaments in the filament yarns being opposite to the direction of twist of the filament yarns and the number of twists of the yarns being greater than the number of twists of the filaments.

9. A reinforcing cable as claimed in claim 8, characterized in that the difference between the twists of the filament yarns and the twists of the filaments of aromatic polyamide is between 50 and 200 twists per metre.

10. A reinforcing cable as claimed in claim 8 or 9, characterized in that the steel wires and the yarns are twisted in the same direction.

11. A reinforcing cable as claimed in one or more of claims 1 to 10, characterized in that the filaments of aromatic polyamide are treated with a lubricant.

12. A reinforcing cable as claimed in one or more of claims 1 to 11 comprising 10 to 40 % by weight and preferably 15 to 25 % by weight filaments of aromatic polyamide.

13. A reinforcing cable as claimed in one or more of claims 1 to 12 having a substantially circular cross-section.

14. A reinforcing cable as claimed in one or more of claims 1 to 13, characterized in that the filaments (13) of aromatic polyamide are arranged in the core around which the steel wires (14) are twisted.

15. A reinforcing cable as claimed in claim 14, characterized in that the broad side of the steel wires (14) is arranged in the peripheral direction.

16. A reinforcing cable as claimed in claim 14 or 15 comprising at least five steel wires.

17. A reinforcing cable as claimed in claim 16 comprising twelve steel wires (14).

18. A reinforcing cable as claimed in one or more of claims 1 to 17 around which a wrapping wire (15) is helically wound.

19. A reinforcing cable as claimed in claim 18, characterized in that the wrapping wire (15) is a steel wire which has a substantially rectangular cross-section rounded off at the corners.

20. A reinforcing cable as claimed in one or more of claims 1 to 19 having a specific tensile strength of 500 to 900 N/ktex.

21. The use of the reinforcing cables claimed in one or more of claims 1 to 20 for the production of tyres for motor vehicles, conveyor belts and drive belts.

22. The use of the reinforcing cables claimed in one or more of claims 1 to 30 in the belt of a radial tyre for motor vehicles, more especially heavy-goods vehicles, earth-moving machines, aircraft or tractors.

23. A pneumatic tyre, characterized in that it contains the reinforcing cables claimed in one or more of claims 1 to 20.


## Revendications

1. Câble de renforcement, constitué d'au moins deux composants, un premier composant étant constitué de fils d'acier et un deuxième composant étant constitué de fils en polyamides aromatiques, caractérisé en ce que, dans le premier composant, chaque fil d'acier a une section approximativement rectangulaire, dont les arêtes sont arrondies, et est tordu, et que les fils en le polyamide aromatique sont retordus les uns avec les autres pour donner un fil continu.

2. Câble de renforcement selon la revendication 1, caractérisé en ce que les fils d'acier sont en acier étiré à 0,6-0,9 % en poids de carbone, et, en tant que fils ronds étirés, présentent une résistance à la traction de 2 500 à 3 500 N/mm².

3. Câble de renforcement selon la revendication 1 ou 2, caractérisé en ce que chaque fil d'acier comporte 40 à 200 torsions par mètre.

4. Câble de renforcement selon l'une ou plusieurs des revendications 1 à 3, caractérisé en ce que les fils d'acier, disposés les uns à côté des autres, le sont en contact linéaire.

5. Câble de renforcement selon l'une ou plusieurs des revendications 1 à 4, caractérisé en ce que l'aire de section transversale de chaque fil d'acier est comprise entre 0,03 et 0,2 mm².

6. Câble de renforcement selon l'une ou plusieurs des revendications 1 à 5, caractérisé en ce que le rapport de la largeur à l'épaisseur de chaque section transversale de fil d'acier est compris entre 1 et 4.

7. Câble de renforcement selon l'une ou plusieurs des revendications 1 à 6, caractérisé en ce que deux fils d'acier, ou plus, sont tordus les uns avec les autres.

8. Câble de renforcement selon l'une ou plusieurs des revendications 1 à 7, caractérisé en ce qu'au moins deux fils continus retordus, en des fils en un polyamide aromatique, sont retordus les uns avec les autres, le sens de la torsion des fils dans les fils continus étant opposé au sens de la torsion des fils continus, le nombre des torsions de retordage des fils continus étant supérieur au nombre des torsions de retordage des fils.

9. Câble de renforcement selon la revendication 8, caractérisé en ce que la différence entre les torsions de retordage des fils continus et les torsions de retordage des fils en polyamide aromatique est de 50 à 200 torsions par mètre.

10. Câble de renforcement selon la revendication 8 ou 9, caractérisé en ce que la torsion des fils d'acier et le retordage des fils continus présentent le même sens de torsion.

11. Câble de renforcement selon l'une ou plusieurs des revendications 1 à 10, caractérisé en ce que les fils en polyamide aromatique sont pourvus d'un lubrifiant.

12. Câble de renforcement selon l'une ou plusieurs des revendications 1 à 11, comportant de 10 à 40 % en poids, de préférence de 15 à 25 % en poids de fils en polyamide aromatique.

13. Câble de renforcement selon l'une ou plusieurs des revendications 1 à 12, avec une section transversale approximativement circulaire.

14. Câble de renforcement selon l'une ou plusieurs des revendications 1 à 13, caractérisé en ce que les fils (13) en polyamide aromatique sont disposés dans l'âme autour de laquelle sont tordus les fils d'acier (14).

15. Câble de renforcement selon la revendication 14, caractérisé en ce que le côté large des fils d'acier (14) est disposé dans le sens périphérique.

16. Câble de renforcement selon la revendication 14 ou 15, avec au moins cinq fils d'acier.

17. Câble de renforcement selon la revendication 16, avec douze fils d'acier (14).

18. Câble de renforcement selon l'une ou plusieurs des revendications 1 à 17, enroulé en hélice avec un fil de bouclage (15).

19. Câble de renforcement selon la revendication 18, caractérisé en ce que le fil de bouclage (15) est un fil d'acier qui présente une section transversale approximativement rectangulaire, dont les arêtes sont arrondies.

20. Câble de renforcement selon l'une ou plusieurs des revendications 1 à 19, avec une résistance spécifique à la traction de 500 à 900 N/ktex.

21. Utilisation des câbles de renforcement selon l'une ou plusieurs des revendications 1 à 20, pour réaliser des pneumatiques pour véhicules, des bandes de transport et des courroies de transmission.

22. Utilisation des câbles de renforcement selon l'une ou plusieurs des revendications 1 à 20 dans la ceinture d'un pneu à carcasse radiale pour véhicule, en particulier des poids lourds, des engins de terrassement, des avions ou des tracteurs.

23. Pneumatique, caractérisé en ce qu'il contient des câbles de renforcement selon l'une ou plusieurs des revendications 1 à 20.

Fig.1

Fig.2

Fig.3

Fig.4

2

Fig. 5

EP 0 126 965 B1

Kraft [N]

1cm ≙ 200N          1cm ≙ o,2% Dehnung          Dehnung [%]

Fig.6

1cm≙200N
1cm≙o,2%Dehnur

Dehnung[%]

Kraft
[N]

3400
3200
3000
2800
2600
2400
2200
2000
1800
1600
1400
1200
1000
800
600
400
200
0

Fig. 7

Fig. 8

Fig. 9

Fig. 10